# EUROPEAN PATENT SPECIFICATION

(11) **EP 1 247 670 B1**
(45) Date of publication and mention of the grant of the patent: **16.01.2008**
(21) Application number: 02075974.2
(22) Date of filing: 13.03.2002
(51) Int. Cl.: B60H 1/00

(54) **Air conditioning system for a motor vehicle**
Fahrzeugklimaanlage
Système de climatisation d'un véhicule

(30) Priority: 04.04.2001 GB 0108444
(43) Date of publication of application: 09.10.2002
(73) Proprietor: Delphi Technologies, Inc., Troy, MI 48007 (US)
(72) Inventor: Heys, Malcolm S., 8053 Bertrange (LU)
(74) Representative: Denton, Michael John

(56) References cited:
- US-A- 3 897 719
- US-A- 4 664 152
- US-A- 4 716 741

## Description

### Technical Field

The present invention relates to an air conditioning system for the passenger compartment of a motor vehicle, and more particularly to an air conditioning system which can provide both heating and cooling for the passenger compartment. The present invention also relates to a reversing valve for use in an air conditioning system.

### Background of the Invention

Air conditioning systems for the passenger compartments of motor vehicles are well known. In general, these systems comprise an inside heat exchanger (located within, or associated with, the passenger compartment) and an outside heat exchanger (located outside the passenger compartment). A pair of fluid passages connect the heat exchangers to allow the circulation of fluid through the heat exchangers. An expansion device is positioned in one of the fluid passages. A compressor and accumulator/dryer is positioned in the other fluid passage. When fluid is pumped by the compressor through the outside heat exchanger, the expansion device, the inside heat exchanger and the accumulator/dryer in succession, air passing through the inside heat exchanger is cooled as the air flows into the passenger compartment. When fluid is pumped in the reverse direction through the inside heat exchanger, the expansion device, the outside heat exchanger and the accumulator/dryer in succession, air passing through the inside heat exchanger is heated as the air flows into the passenger compartment. A reversing valve is positioned in the other fluid passage to provide the required flow direction for the fluid. EP-A-0993977 describes such an arrangement and the operational control thereof. Known reversing valves can be large in size, and/or operate slowly.
US-A-4716741 discloses a system in accordance with the preamble of Claim 1.
US-A-4664152 discloses a valve in accordance with the preamble of Claim 9.

### Summary of the Invention

It is an object of the present invention is to provide an air conditioning system in which the reversing valve is small but capable of operating quickly.

An air conditioning system in accordance with the present invention for a passenger compartment of a motor vehicle comprises a first heat exchanger positionable outside the passenger compartment; a second heat exchanger for treating air entering the passenger compartment; a first fluid passage between the first and second heat exchangers; a second fluid passage between the first and second heat exchangers; an expansion device positioned in the first fluid passage; a compressor for pumping fluid into the second fluid passage and either in a first direction sequentially through the first heat exchanger, the expansion device, and the second heat exchanger, or in a second direction sequentially through the second heat exchanger, the expansion device, and the first heat exchanger; and a reversing valve in the second fluid passage for controlling the direction of the flow of fluid; wherein the reversing valves comprises a housing having an axially extending bore; a main piston having axially spaced piston rings making a sealing sliding fit in the bore such that the main piston can move in an axial direction relative to the housing between a first position and a second position; axially spaced fluid chambers in the bore defined by the piston rings; an inner piston positioned in a through bore in the main piston, the inner piston being rotatable relative to the main piston between a first position and a second position, and having aligned first and second bores separate by a wall and fluidly connecting predetermined fluid chambers dependent on the position of the inner piston; means for rotating the inner piston; fluid ports fluidly connecting predetermined fluid chambers to the compressor and to the second fluid passage dependent on the position of the main piston; wherein in the first position of the inner piston pressurised fluid from the compressor is direct to at least one predetermined fluid chamber by the inner piston to move the main piston to its first position; and wherein in the second position of the inner piston pressurised fluid from the compressor is directed by the inner piston to at least another predetermined fluid chamber to move the main piston to its second position.

The present invention also includes a reversing valve for an air conditioning system.

The present invention uses the pressurised fluid leaving the compressor to create the pressure differential on the main piston to help drive the main piston to the required position for the required direction of fluid flow through the system. With this arrangement, the movement of the main piston between its first and second positions is very rapid, and the size of the reversing valve can be kept to a minimum.

### Brief Description of the Drawings

The present invention will now be described, by way of example, with reference to the accompanying drawings, in which:-
Figure 1 is a schematic view of an air conditioning system in accordance with the present invention;
Figure 2 is a cross-sectional view of a reversing valve for use in the air conditioning system of Figure 1 in a first working position;
Figure 3 is a cross-sectional view of the reversing valve of Figure 2 in a second working position; and
Figure 4 is an exploded view of the reversing valve of Figures 2 and 3.

### Description of the Preferred Embodiment

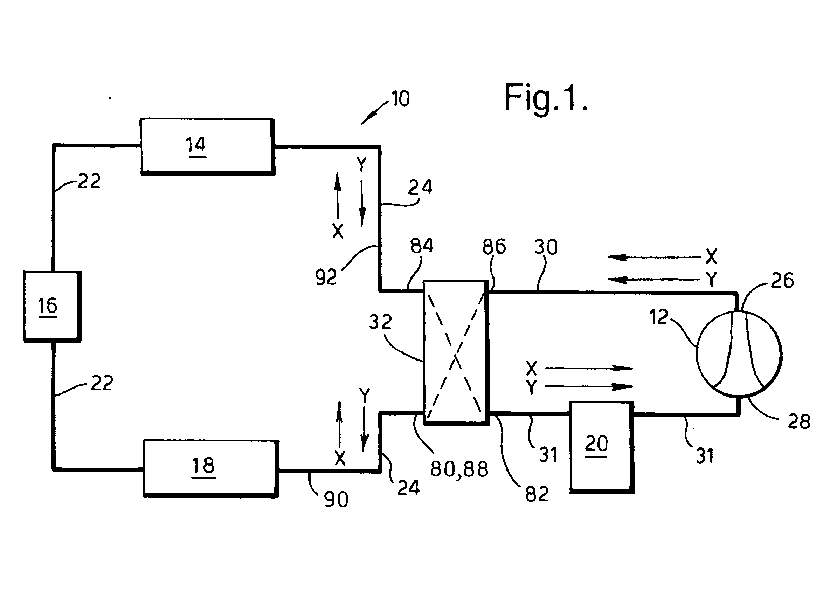

Referring to Figure 1 of the drawings, the air conditioning system 10 in accordance with the present invention is for use in a motor vehicle for heating or cooling the passenger compartment (not shown) of the motor vehicle. The air conditioning system 10 comprises the usual components of a compressor 12, an outside heat exchanger 14, an orifice tube or expansion device 16, an inside heat exchanger 18, and an accumulator/dryer 20. The outside heat exchanger 14 is located outside of the passenger compartment. The inside heat exchanger 18 is typically located inside the passenger compartment, although may be positioned outside the passenger compartment but still used to treat air entering the passenger compartment. A first fluid passage 22 fluidly connects the outside heat exchanger 14 with the inside heat exchanger 18 by way of the expansion device 16. A second fluid passage 24 fluidly connects the outside heat exchanger 14 with the inside heat exchanger 18 by way of a reversing valve 32. The compressor 12 and the accumulator/dryer 20 fluidly connect with the second fluid passage 24 by way of the reversing valve 32. The compressor 12 has a fluid outlet 26 connected to the reversing valve 32 by way of a third fluid passage 30. The compressor 12 has a fluid inlet 28 connected to the reversing valve 32 by way of the accumulator/dryer 20 and a fourth fluid passage 31.

During normal (cooling) operation of the air conditioning system 10, the reversing valve 32 is set to allow fluid flow in the direction X such that air passing through the inside heat exchanger 18 is cooled so that the air conditioning system operates to cool the passenger compartment. In this cooling mode, the refrigerant fluid in the system 10 is pumped by the compressor 12 through the reversing valve 32, the outside heat exchanger 14, the expansion device 16, the inside heat exchanger 18, the reversing valve 32, and the accumulator/dryer 20 in succession before returning to the compressor.

When initial, supplemental, or prolonged heating of the passenger compartment is required, the reversing valve 32 is set to allow fluid flow in the direction Y such that air passing through the inside heat exchanger 18 is heated so that the air conditioning system operates to heat the passenger compartment. In this heat pump mode, the refrigerant fluid in the system 10 is pumped by the compressor 12 through the reversing valve 32, the inside heat exchanger 18, the expansion device 16, the outside heat exchanger 14, the reversing valve 32, and the accumulator/dryer 20 in succession before returning to the compressor.

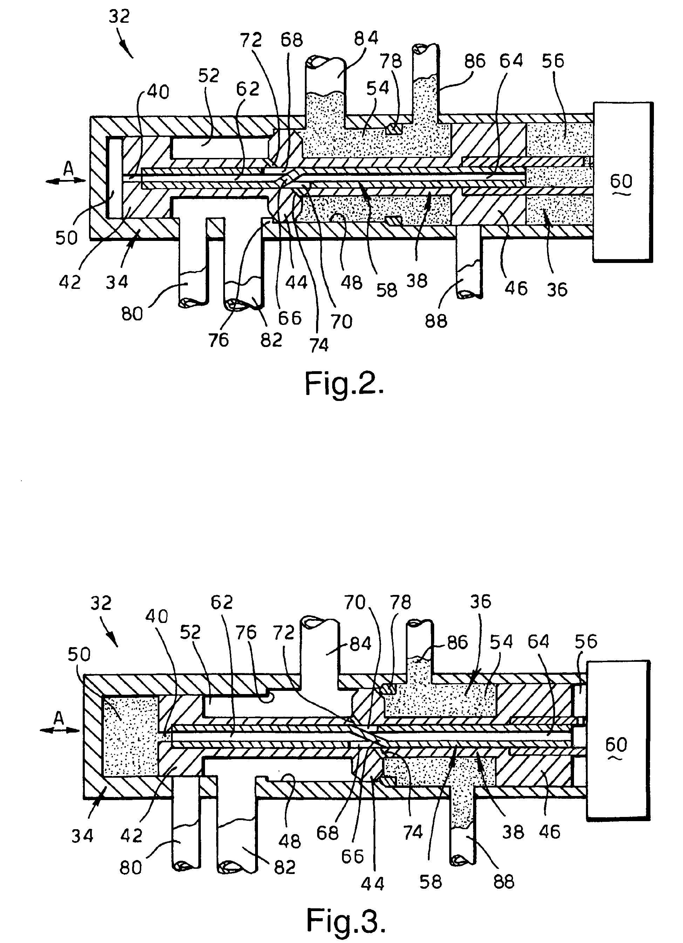

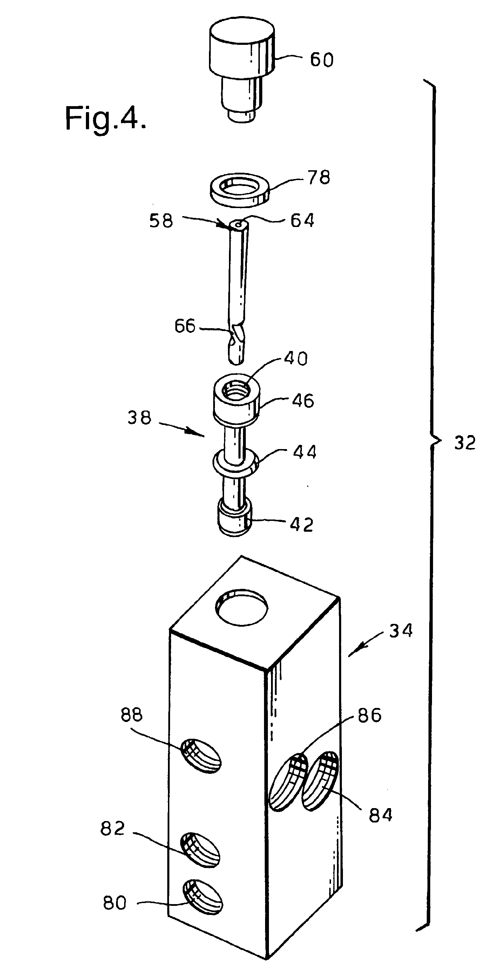

The reversing valve 32 is shown in greater detail in Figures 2 to 4. The reversing valve 32 comprises a housing 34 having an axially extending bore 36. A main piston 38 makes a sealing sliding fit in the bore 36 and is capable of reciprocating movement in the axial direction A relative to the housing 34. The main piston 38 has an axially extending through bore 40 and first, second and third piston rings 42, 44, 46, respectively. The piston rings 42-46 are axially spaced apart and make a sealing sliding engagement with the inner surface 48 of the bore 36 to define first, second, third and fourth fluid chambers 50, 52, 54, 56 within the bore. The second chamber 52 is located between the first and second piston rings 42, 44. The third chamber 54 is located between the second and third piston rings 44, 46. The first chamber 50 is adjacent the first piston ring 42. The fourth chamber 56 is adjacent the third piston ring 46. An inner piston 58 is positioned in the through bore 40 of the main piston 38 and is axially movable with the main piston relative to the housing 34. The inner piston 58 is rotatable about its longitudinal axis, relative to the main piston 38, by an electric motor 60. The inner piston 58 has axially extending, aligned, first and second bores 62, 64, respectively, which are separated by an inner wall 66 which extends at an angle to the longitudinal axis of the inner piston. The first bore 62 of the inner piston 58 fluidly connects with the first chamber 50. The second bore 64 of the inner piston 58 fluidly connects with the fourth chamber 56.

First and second apertures 68, 70 are formed in the inner piston 58. The apertures 68, 70 are substantially radially opposite one another, with the first aperture 68 on one side of the wall 66, and the second aperture 70 on the other side of the wall. The first aperture 68 opens into the first bore 62 of the inner piston 58. The second aperture 70 opens into the second bore 64 of the inner piston 58. First and second apertures 72, 74 are formed in the main piston 38. The apertures 72, 74 are on radially opposite sides of the main piston 38, with the first aperture 72 on one side of the second piston ring 44, and the second aperture 74 on the other side of the second piston ring. The first aperture 72 opens into the second chamber 52. The second aperture 74 opens into the third chamber 54. In a first rotational position of the inner piston 58 relative to the main piston 38 (Figure 2), the first aperture 68 of the inner piston opens into the first aperture 72 of the main piston to fluidly connect the first and second chambers 50, 52; and the second aperture 70 of the inner piston opens into the second aperture 74 of the main piston to fluidly connect the third and fourth chambers 54, 56. In a second rotational position of the inner piston 58 relative to the main piston 38 (Figure 3), the first aperture 68 of the inner piston opens into the second aperture 74 of the main piston to fluidly connect the first and third chambers 50, 54; and the second aperture 70 of the inner piston opens into the first aperture 72 of the main piston to fluidly connect the second and fourth chambers 52, 56.

First and second piston seats 76, 78, respectively, are formed in the bore 36 of the housing 34. The first and second piston seats 76, 78 are axially spaced apart. In the present embodiment, the first piston seat 76 is defined by a shoulder formed in the inner surface 48 of the bore 36, and the second piston seat 78 is defined by an annular ring inserted in the bore. In a first position of the main piston 38 relative to the housing 34 (Figure 2), the second piston ring 44 engages the first piston seat 76. In a second position of the main piston 38 relative to the housing 34 (Figure 3), the second piston ring 44 engages the second piston seat 78.

First, second, third, fourth and fifth ports 80, 82, 84, 86, 88, respectively, are formed in the housing 34 and are axially spaced apart. In the first position of the main piston 38 relative to the housing 34 (Figure 2), the first and second ports 80, 82 are fluidly connected to the second chamber 52; the third and fourth ports 84, 86 are fluidly connected to the third chamber 54; and the fifth port 88 is closed by the third piston ring 46. In the second position of the main piston 38 relative to the housing 34 (Figure 3), the second and third ports 82, 84 are fluidly connected to the second chamber 52; the fourth and fifth ports 86, 88 are fluidly connected to the third chamber 54; and the first port 80 is closed by the first piston ring 42.

The first port 80 and the fifth port 88 are fluidly connected by way of a first portion 90 the second fluid passage 24 to the inside heat exchanger 18. The second port 82 is fluidly connected to the accumulator/dryer 20 and the inlet 28 of the compressor 12 by way of the fourth fluid passage 31. The third port 84 is fluidly connected by way of a second portion 92 of the second fluid passage 24 to the outside heat exchanger 14. The fourth port 86 is fluidly connected to the outlet 26 of the compressor 12 by way of the third fluid passage 30.

In the above mentioned cooling mode of the system 10, the electric motor 60 is actuated to place the inner piston 58 in its first position (as shown in Figure 2) relative to the main piston 38. Pressurised fluid from the compressor 12 enters the third chamber 54 through the fourth port 86. The pressurised fluid in the third chamber 54 passes through the second aperture 74 in the main piston 38, the second aperture 70 in the inner piston 58, the second bore 64 in the inner piston, into the fourth chamber 56. The pressurised fluid in the fourth chamber 56 acts on the third piston ring 46, and the pressurised fluid in the third chamber 54 acts on the second piston ring 44, to move the main piston 38 to its first position (shown in Figure 2) where the second piston ring engages the first piston seat 76. In this first position of the main piston 38, the pressurised fluid leaves the third fluid chamber 54 through the third port 84 to circulate the system 10 in the direction X. Fluid leaving the inside heat exchanger 18 has a reduced pressure (compared to the pressurised fluid leaving the compressor 12) and passes through the first port 80 into the second chamber 52, and leaves the second chamber through the second port 82 to return to the compressor 12. The lower pressure in the second chamber 52 equalises (through the first aperture 72 in the main piston 38, the first aperture 68 in the inner piston 58, and the first bore 62 in the inner piston) with the pressure in the first chamber 50.

In the above mentioned heat pump mode of the system 10, the electric motor 60 is actuated to place the inner piston 58 in its second position (as shown in Figure 3) relative to the main piston 38. Pressurised fluid from the compressor 12 enters the third chamber 54 through the fourth port 86. The pressurised fluid in the third chamber 54 passes through the second aperture 74 in the main piston 38, the first aperture 68 in the inner piston 58, the first bore 62 in the inner piston, into the first chamber 50. The pressurised fluid in the first chamber 50 acts on the first piston ring 42, and the pressurised fluid in the third chamber 54 acts on the third piston ring 46, to move the main piston 38 to its second position (shown in Figure 3) where the second piston ring 44 engages the second piston seat 78. In this second position of the main piston 38, the pressurised fluid leaves the third fluid chamber 54 through the fifth port 88 to circulate the system 10 in the direction Y. Fluid leaving the outside heat exchanger 14 has a reduced pressure (compared to the pressurised fluid leaving the compressor 12) and passes through the third port 84 into the second chamber 52, and leaves the second chamber through the second port 82 to return to the compressor 12. The lower pressure in the second chamber 52 equalises (through the first aperture 72 in the main piston 38, the second aperture 70 in the inner piston 58, and the second bore 64 in the inner piston) with the pressure in the fourth chamber 56.

The present invention uses the pressurised fluid leaving the compressor 12 to create the pressure differential on the main piston 38 to help drive the main piston to the required position for the required direction of fluid flow through the system 10. The electric motor 60 rotates the inner piston 58 to either direct the pressurised fluid to the fourth chamber 56 for the cooling mode, or to direct the pressurised fluid to the first chamber 50 for heat pump mode. With this arrangement, the movement of the main piston between its first and second positions is very rapid, and the size of the electric motor 60 and the reversing valve 32 can be kept to a minimum.

The compressor 12 is preferably an electronically variable compressor the operation of which is controlled by an electronic displacement control valve (not shown). An example of a suitable compressor and control valve is described in EP-A-0993977. The compressor 12 is preferably a wobble plate compressor. As an alternative, a swash plate compressor may be used. As a further alternative, the accumulator/dryer 20 may be locate elsewhere in the system 10. A two-way receiver/dryer may alternatively be used in the system 10. The electric motor 60 may be replaced by alternative means for rotating the inner piston 58, such as a solenoid connected with the inner piston by a rack and pinion arrangement. The annular ring defining the second piston seat 78 may be replaced by a cylindrical sleeve which extends past the third piston ring 46.

## Claims

1. An air conditioning system for a passenger compartment of a motor vehicle comprising a first heat exchanger (14) positionable outside the passenger compartment; a second heat exchanger (18) for treating air entering the passenger compartment; a first fluid passage (22) between the first and second heat exchangers; a second fluid passage (24) between the first and second heat exchangers; an expansion device (16) positioned in the first fluid passage; a compressor (12) for pumping fluid into the second fluid passage and either in a first direction sequentially through the first heat exchanger, the expansion device, and the second heat exchanger, or in a second direction sequentially through the second heat exchanger, the expansion device, and the first heat exchanger; and a reversing valve (32) in the second fluid passage for controlling the direction of the flow of fluid; **characterised in that** the reversing valve (32) comprises a housing (34) having an axially extending bore (36); a main piston (38) having axially spaced piston rings (42-46) making a sealing sliding fit in the bore such that the main piston can move in an axial direction (A) relative to the housing between a first position and a second position axially spaced fluid chambers (50-56) in the bore defined by the piston rings; an inner piston (58) positioned in a through bore (40) in the main piston, the inner piston being rotatable relative to the main piston between a first position and a second position, and having aligned first and second bores (62,64) separate by a wall (66) and fluidly connecting predetermined fluid chambers dependent on the position of the inner piston; means (60) for rotating the inner piston; fluid ports (80-88) fluidly connecting predetermined fluid chambers to the compressor and to the second fluid passage dependent on the position of the main piston; wherein in the first position of the inner piston pressurised fluid from the compressor is direct to at least one predetermined fluid chamber by the inner piston to move the main piston to its first position; and wherein in the second position of the inner piston pressurised fluid from the compressor is directed by the inner piston to at least another predetermined fluid chamber to move the main piston to its second position.

2. An air conditioning system as claimed in Claim 1, wherein the means (60) for rotating the inner piston includes an electric motor.

3. An air conditioning system as claimed in Claim 1, wherein the means (60) for rotating the inner piston includes a solenoid.

4. An air conditioning system as claimed in any one of Claims 1 to 3, wherein the reversing valve (32) further comprises first and second piston seats (76, 78); wherein, in the first position of the main piston (38), one of the piston rings (44) engages the first piston seat (76); and wherein, in the second position of the main piston, said one piston ring (44) engages the second piston seat (78).

5. An air conditioning system as claimed in any one of Claims 1 to 4, wherein the inner piston (58) has a first radially extending aperture (68) opening into the first bore (62) in the inner piston, and a second radially extending aperture (70) opening into the second bore (64) in the inner piston; wherein the main piston (38) has a first aperture (72) opening into one predetermined fluid chamber (52), and a second aperture (74) opening into another predetermined fluid chamber (54); wherein, in the first position of the inner piston, the first apertures are aligned and the second apertures are aligned; and wherein, in the second position of the inner piston, the first aperture in the inner piston is aligned with the second aperture in the main piston and the second aperture in the inner piston is aligned with the first aperture in the main piston.

6. An air conditioning system as claimed in Claim 5, wherein the first and second apertures (68, 70) in the inner piston (58) are substantially radially aligned; and wherein the inner piston is axially movable with the main piston (38).

7. An air conditioning system as claimed in any one of Claims 1 to 6, wherein the main piston (38) has first, second and third axially spaced piston rings (42, 44, 46) which define first, second, third and fourth axially spaced fluid chambers (50-56) in the bore (40) of the housing (34), the first bore (62) in the inner piston (58) being fluidly connected with the first fluid chamber (50), and the second bore (64) in the inner piston being fluidly connected with the fourth fluid chamber (56).

8. An air conditioning system as claimed in Claim 7, wherein he reversing valve (32) has first, second, third, fourth and fifth axially spaced fluid ports (80-88), the first and fifth fluid ports (80, 88) being fluidly connected to the second heat exchanger (18), the second fluid port (82) being fluidly connected to the compressor inlet (28), the third fluid port (84) being fluidly connected to the first heat exchanger (14), and the fourth port (86) being fluidly connected to the compressor outlet (26); wherein, in the first position of the main piston (38), the first and second fluid ports are fluidly connected to the second fluid chamber (52), the third and fourth, fluid ports are fluidly connected to the third fluid chamber (54), and the fifth fluid port is closed; and wherein, in the second position of the main piston, the first fluid port is closed the second and third fluid ports are fluidly connected to the second fluid chamber, and the fourth and fifth fluid ports are fluidly connected to the third fluid chamber.

9. A reversing valve for an air conditioning system comprising a housing (34) having an axially extending bore (36) ; a main piston (38) having axially spaced piston rings (42-46) making a sealing sliding fit in the bore such that the main piston can move in an axial direction (A), relative to the housing between a first position and a second position; axially spaced fluid chambers (50-56) in the bore defined by the piston rings ; fluid ports (80-88) fluidly connectable to predetermined fluid chambers dependent on the position of the main piston; **characterised by** an inner piston (58) positioned in a through bore (40) in the main piston, the inner piston being rotatable relative to the main piston between a first position and a second position, and having aligned first and second bores (62,64) separate by a wall (66) and fluidly connecting predetermined fluid chambers dependent on the position of the inner piston; means (60) for rotating the inner piston; wherein in the first position of the inner piston incoming pressurised fluid is direct to at least one predetermined fluid chamber by the inner piston to move the main piston to its first position; and wherein in the second position of the inner piston incoming pressurised fluid is directed by the inner piston to at least another predetermined fluid chamber to move the main piston to its second position.

10. A reversing valve as claimed in Claim 9, wherein the means (60) for rotating the inner piston includes an electric motor.

11. A reversing valve as claimed in Claim 9, wherein the means (60) for rotating the inner piston includes a solenoid.

12. A reversing valve as claimed in any one of Claims 9 to 11, wherein the reversing valve (32) further comprises first and second piston seats (76,78); wherein, in the first position of the main piston (38), one of the piston rings (44) engages the first piston seat (76); and wherein, in the second position of the main piston, said one piston ring (44) engages the second piston seat (78).

13. A reversing valve as claimed in any one of Claims 9 to 12, wherein the inner piston (58) has a first radially extending aperture (68) opening into the first bore (62) in the inner piston, and a second radially extending aperture (70) opening into the second bore (64) in the inner piston; wherein the main piston (38) has a first aperture (72) opening into one predetermined fluid chamber (52), and a second aperture (74) opening into another predetermined fluid chamber (54); wherein, in the first position of the inner piston, the first apertures are aligned and the second apertures are aligned; and wherein, in the second position of the inner piston, the first aperture in the inner piston is aligned with the second aperture in the main piston and the second aperture in the inner piston is aligned with the first aperture in the main piston.

14. A reversing valve as claimed in Claim 13, wherein the first and second apertures (68,70) in the inner piston (58) are substantially radially aligned; and wherein the inner piston is axially movable with the main piston (38).

15. A reversing valve as claimed in any one of Claims 9 to 14, wherein the main piston (38) has first, second and third axially spaced piston rings (42-46) which define first second, third and fourth axially spaced fluid chambers (50-56) in the bore (40) the housing (34), the first bore (62) in the inner piston (58) being fluidly connected with the first fluid chamber (50), and the second bore (64) in the inner piston being fluidly connected with the fourth fluid chamber (56).

16. A reversing valve as claimed in Claim 15, wherein the reversing valve (32) has first, second, third, fourth and fifth axially spaced fluid ports (80-88); wherein, in the first position of the main piston (38), the first and second fluid ports (80, 82) are fluidly connected to the second fluid chamber (52), the third and fourth fluid ports (84,86) are fluidly connected to the third fluid chamber (54), and the fifth fluid port (88) is closed; and wherein, in the second position of the main piston, the first fluid port is closed, the second and third fluid ports are fluidly connected to the second fluid chamber, and the fourth and fifth fluid ports are fluidly connected to the third fluid chamber.

## Patentansprüche

1. Klimaanlage für einen Innenraum eines Kraftfahrzeugs, umfassend einen ersten Wärmetauscher (14), der außerhalb des Innenraumes positionierbar ist; einen zweiten Wärmetaucher (18) zum Behandeln von Luft, die in den Innenraum eintritt; einen ersten Fluiddurchgang (22) zwischen dem ersten und dem zweiten Wärmetauscher; einen zweiten Fluiddurchgang (24) zwischen dem ersten und dem zweiten Wärmetauscher; eine Ausdehnungsvorrichtung (16), die in dem ersten Fluiddurchgang positioniert ist; einen Verdichter (12), um Fluid in den zweiten Fluiddurchgang und entweder in einer ersten Richtung nacheinander durch den ersten Wärmetauscher, die Ausdehnungsvorrichtung und den zweiten Wärmetauscher hindurch oder in einer zweiten Richtung nacheinander durch den zweiten Wärmetauscher, die Ausdehnungsvorrichtung und den ersten Wärmetauscher hindurch zu pumpen; und ein Umkehrventil (32) in dem zweiten Fluiddurchgang zum Steuern der Richtung der Fluidströmung;
**dadurch gekennzeichnet, dass**
das Umkehrventil (32) umfasst: ein Gehäuse (34) mit einer axial verlaufenden Bohrung (36); einen Hauptkolben (38) mit axial beabstandeten Kolbenringen (42-46), die einen dichtenden Gleitsitz in der Bohrung herstellen, sodass sich der Hauptkolben in einer axialen Richtung (A) relativ zu dem Gehäuse zwischen einer ersten Position und einer zweiten Position bewegen kann; axial beabstandete Fluidkammern (50-56) in der durch die Kolbenringe definierten Bohrung; einen inneren Kolben (58), der in einer Durchgangsbohrung (40) in dem Hauptkolben positioniert ist, wobei der innere Kolben relativ zu dem Hauptkolben zwischen einer ersten Position und einer zweiten Position drehbar ist und eine erste und eine zweite ausgerichtete Bohrung (62, 64) aufweist, die durch eine Wand (66) getrennt sind und vorbestimmte Fluidkammern abhängig von der Position des inneren Kolbens fluidmäßig verbinden; ein Mittel (60) zum Drehen des inneren Kolbens; Fluidkanäle (80-88), die vorbestimmte Fluidkammern mit dem Verdichter und mit dem zweiten Fluiddurchgang abhängig von der Position des Hauptkolbens fluidmäßig verbinden; wobei in der ersten Position des inneren Kolbens unter Druck stehendes Fluid durch den inneren Kolben von dem Verdichter zu mindestens einer vorbestimmten Fluidkammer gelenkt wird, um den Hauptkolben in seine erste Position zu bewegen; und wobei in der zweiten Position des inneren Kolbens unter Druck stehendes Fluid durch den inneren Kolben von dem Verdichter zu mindestens einer weiteren vorbestimmten Fluidkammer gelenkt wird, um den Hauptkolben in seine zweite Position zu bewegen.

2. Klimaanlage nach Anspruch 1, wobei das Mittel (60) zum Drehen des inneren Kolbens einen Elektromotor umfasst.

3. Klimaanlage nach Anspruch 1, wobei das Mittel (60) zum Drehen des inneren Kolbens ein Solenoid umfasst.

4. Klimaanlage nach einem der Ansprüche 1 bis 3, wobei das Umkehrventil (32) ferner einen ersten und einen zweiten Kolbensitz (76, 78) umfasst; wobei in der ersten Position des Hauptkolbens (38) einer der Kolbenringe (44) mit dem ersten Kolbensitz (76) in Eingriff steht; und wobei in der zweiten Position des Hauptkolbens der eine Kolbenring (44) mit dem zweiten Kolbensitz (78) in Eingriff steht.

5. Klimaanlage nach einem der Ansprüche 1 bis 4, wobei der innere Kolben (58) eine erste radial verlaufende Öffnung (68), die sich in die erste Bohrung (62) in dem inneren Kolben hinein öffnet, und eine zweite radial verlaufende Öffnung (70) aufweist, die sich in die zweite Bohrung (64) in dem inneren Kolben hinein öffnet; wobei der Hauptkolben (38) eine erste Öffnung (72), die sich in eine vorbestimmte Fluidkammer (52) hinein öffnet, und eine zweite Öffnung (74) aufweist, die sich in eine weitere vorbestimmte Fluidkammer (54) hinein öffnet; wobei in der ersten Position des inneren Kolbens die ersten Öffnungen ausgerichtet sind und die zweiten Öffnungen ausgerichtet sind; und wobei in der zweiten Position des inneren Kolbens die erste Öffnung in dem inneren Kolben mit der zweiten Öffnung in dem Hauptkolben ausgerichtet ist und die zweite Öffnung in dem inneren Kolben mit der ersten Öffnung in dem Hauptkolben ausgerichtet ist.

6. Klimaanlage nach Anspruch 5, wobei die erste und die zweite Öffnung (68, 70) in dem inneren Kolben (58) im Wesentlichen radial ausgerichtet sind; und wobei der innere Kolben axial mit dem Hauptkolben (38) bewegbar ist.

7. Klimaanlage nach einem der Ansprüche 1 bis 6, wobei der Hauptkolben (38) einen ersten, einen zweiten und einen dritten axial beabstandeten Kolbenring (42, 44, 46) aufweist, die eine erste, eine zweite, eine dritte und eine vierte axial beabstandete Fluidkammer (50-56) in der Bohrung (40) des Gehäuses (34) definieren, wobei die erste Bohrung (62) in dem inneren Kolben (58) mit der ersten Fluidkammer (50) fluidmäßig verbunden ist und die zweite Bohrung (64) in dem inneren Kolben mit der vierten Fluidkammer (56) fluidmäßig verbunden ist.

8. Klimaanlage nach Anspruch 7, wobei das Umkehrventil (32) einen ersten, einen zweiten, einen dritten, einen vierten und einen fünften axial beabstandeten Fluidkanal (80-88) aufweist, wobei der erste und der fünfte Fluidkanal (80, 88) mit dem zweiten Wärmetauscher (18) fluidmäßig verbunden sind, der zweite Fluidkanal (82) mit dem Verdichtereinlass (28) fluidmäßig verbunden ist, der dritte Fluidkanal (84) mit dem ersten Wärmetauscher (14) fluidmäßig verbunden ist und der vierte Fluidkanal (86) mit dem Verdichterauslass (26) fluidmäßig verbunden ist; wobei in der ersten Position des Hauptkolbens (38) der erste und der zweite Fluidkanal mit der zweiten Fluidkammer (52) fluidmäßig verbunden sind, der dritte und der vierte Fluidkanal mit der dritten Fluidkammer (54) fluidmäßig verbunden sind und der fünfte Fluidkanal geschlossen ist; und wobei in der zweiten Position des Hauptkolbens der erste Fluidkanal geschlossen ist, der zweite und der dritte Fluidkanal mit der zweiten Fluidkammer fluidmäßig verbunden sind und der vierte und der fünfte Fluidkanal mit der dritten Fluidkammer fluidmäßig verbunden sind.

9. Umkehrventil für eine Klimaanlage, umfassend ein Gehäuse (34) mit einer axial verlaufenden Bohrung (36); einen Hauptkolben (38) mit axial beabstandeten Kolbenringen (42-46), die einen dichtenden Gleitsitz in der Bohrung herstellen, sodass sich der Hauptkolben in einer axialen Richtung (A) relativ zu dem Gehäuse zwischen einer ersten Position und einer zweiten Position bewegen kann; axial beabstandete Fluidkammern (50-56) in der durch die Kolbenringe definierten Bohrung; Fluidkanäle (80-88), die mit vorbestimmten Fluidkammern abhängig von der Position des Hauptkolbens verbindbar sind;
**gekennzeichnet durch**
einen inneren Kolben (58), der in einer Durchgangsbohrung (40) in dem Hauptkolben positioniert ist, wobei der innere Kolben relativ zu dem Hauptkolben zwischen einer ersten Position und einer zweiten Position drehbar ist und eine erste und eine zweite ausgerichtete Bohrung (62, 64) aufweist, die **durch** eine Wand (66) getrennt sind und vorbestimmte Fluidkammern abhängig von der Position des inneren Kolbens fluidmäßig verbinden; ein Mittel (60) zum Drehen des inneren Kolbens; wobei in der ersten Position des inneren Kolbens ankommendes, unter Druck stehendes Fluid **durch** den inneren Kolben zu mindestens einer vorbestimmten Fluidkammer gelenkt wird, um den Hauptkolben in seine erste Position zu bewegen; und wobei in der zweiten Position des inneren Kolbens ankommendes, unter Druck stehendes Fluid **durch** den inneren Kolben zu mindestens einer weiteren vorbestimmten Fluidkammer gelenkt wird, um den Hauptkolben in seine zweite Position zu bewegen.

10. Umkehrventil nach Anspruch 9, wobei das Mittel (60) zum Drehen des inneren Kolbens einen Elektromotor umfasst.

11. Umkehrventil nach Anspruch 9, wobei das Mittel (60) zum Drehen des inneren Kolbens ein Solenoid umfasst.

12. Umkehrventil nach einem der Ansprüche 9 bis 11, wobei das Umkehrventil (32) ferner einen ersten und einen zweiten Kolbensitz (76, 78) umfasst; wobei in der ersten Position des Hauptkolbens (38) einer der Kolbenringe (44) mit dem ersten Kolbensitz (76) in Eingriff steht; und wobei in der zweiten Position des Hauptkolbens der eine Kolbenring (44) mit dem zweiten Kolbensitz (78) in Eingriff steht.

13. Umkehrventil nach einem der Ansprüche 9 bis 12, wobei der innere Kolben (58) eine erste radial verlaufende Öffnung (68), die sich in die erste Bohrung (62) in dem inneren Kolben hinein öffnet, und eine zweite radial verlaufende Öffnung (70) aufweist, die sich in die zweite Bohrung (64) in dem inneren Kolben hinein öffnet; wobei der Hauptkolben (38) eine erste Öffnung (72), die sich in eine vorbestimmte Fluidkammer (52) hinein öffnet, und eine zweite Öffnung (74) aufweist, die sich in eine weitere vorbestimmte Fluidkammer (54) hinein öffnet; wobei in der ersten Position des inneren Kolbens die ersten Öffnungen ausgerichtet sind und die zweiten Öffnungen ausgerichtet sind; und wobei in der zweiten Position des inneren Kolbens die erste Öffnung in dem inneren Kolben mit der zweiten Öffnung in dem Hauptkolben ausgerichtet ist und die zweite Öffnung in dem inneren Kolben mit der ersten Öffnung in dem Hauptkolben ausgerichtet ist.

14. Umkehrventil nach Anspruch 13, wobei die erste und die zweite Öffnung (68, 70) in dem inneren Kolben (58) im Wesentlichen radial ausgerichtet sind; und wobei der innere Kolben axial mit dem Hauptkolben (38) bewegbar ist.

15. Umkehrventil nach einem der Ansprüche 9 bis 14, wobei der Hauptkolben (38) einen ersten, einen zweiten und einen dritten axial beabstandeten Kolbenring (42-46) aufweist, die eine erste, eine zweite, eine dritte und eine vierte axial beabstandete Fluidkammer (50-56) in der Bohrung (40) des Gehäuses (34) definieren, wobei die erste Bohrung (62) in dem inneren Kolben (58) mit der ersten Fluidkammer (50) fluidmäßig verbunden ist und die zweite Bohrung (64) in dem inneren Kolben mit der vierten Fluidkammer (56) fluidmäßig verbunden ist.

16. Umkehrventil nach Anspruch 15, wobei das Umkehrventil (32) einen ersten, einen zweiten, einen dritten, einen vierten und einen fünften axial beabstandeten Fluidkanal (80-88) aufweist, wobei in der ersten Position des Hauptkolbens (38) der erste und der zweite Fluidkanal (80, 82) mit der zweiten Fluidkammer (52) fluidmäßig verbunden sind, der dritte und der vierte Fluidkanal (84, 86) mit der dritten Fluidkammer (54) fluidmäßig verbunden sind und der fünfte Fluidkanal (88) geschlossen ist; und wobei in der zweiten Position des Hauptkolbens der erste Fluidkanal geschlossen ist, der zweite und der dritte Fluidkanal mit der zweiten Fluidkammer fluidmäßig verbunden sind und der vierte und der fünfte Fluidkanal mit der dritten Fluidkammer fluidmäßig verbunden sind.

## Revendications

1. Système de climatisation pour un compartiment passager d'un véhicule à moteur comportant un premier échangeur thermique (14) pouvant être positionné à l'extérieur du compartiment passager, un deuxième échangeur thermique (18) pour traiter de l'air entrant dans le compartiment passager, un premier passage de fluide (22) entre les premier et second échangeurs thermiques, un deuxième passage de fluide (24) entre les premier et second échangeurs thermiques, un dispositif d'expansion (16) positionné dans le premier passage de fluide, un compresseur (12) pour pomper du fluide dans le deuxième passage de fluide et dans une première direction séquentiellement à travers le premier échangeur thermique, le dispositif d'expansion et le second échangeur thermique, ou dans une seconde direction séquentiellement à travers le second échangeur thermique, le dispositif d'expansion et le premier échangeur thermique, et une soupape d'inversion (32) dans le deuxième passage de fluide pour commander la direction de l'écoulement de fluide, **caractérisé en ce que** la soupape d'inversion (32) comporte un boîtier (34) ayant un alésage (36) s'étendant axialement, un piston principal (38) ayant des segments de piston (42 à 46) espacés axialement constituant un agencement coulissant d'étanchéité dans l'alésage de telle sorte que le piston principal peut se déplacer dans une direction axiale (A) par rapport au boîtier entre une première position et une seconde position, des chambres de fluide (50 à 56) espacées axialement dans l'alésage défini par les segments de piston, un piston intérieur (58) positionné dans un alésage traversant (40) dans le piston principal, le piston intérieur pouvant tourner par rapport au piston principal entre une première position et une seconde position, et ayant les premier et second alésages alignés (62, 64) séparés par une paroi (66), et reliant de manière fluide des chambres de fluide prédéterminées selon la position du piston intérieur, des moyens (60) pour tourner le piston intérieur, des orifices de fluide (80 à 88) reliant de manière fluide des chambres de fluide prédéterminées au compresseur et au deuxième passage de fluide selon la position du piston principal, dans lequel dans la première position du piston intérieur, du fluide mis sous pression provenant du compresseur est dirigé vers au moins une chambre de fluide prédéterminée par le piston intérieur pour déplacer le piston principal vers sa première position, et dans lequel dans la seconde position du piston intérieur, du fluide mis sous pression provenant du compresseur est dirigé par le piston intérieur vers au moins une autre chambre de fluide prédéterminée pour déplacer le piston principal vers sa seconde position.

2. Système de climatisation selon la revendication 1, dans lequel les moyens (60) pour faire tourner le piston intérieur comportent un moteur électrique.

3. Système de climatisation selon la revendication 1, dans lequel les moyens (60) pour faire tourner le piston intérieur comportent un solénoïde.

4. Système de climatisation selon l'une quelconque des revendications 1 à 3, dans lequel la soupape d'inversion (32) comporte en outre des premièr et deuxième sièges de piston (76, 78), dans lequel, dans la première position du piston principal (38), un premier des segments de piston (44) vient en prise avec le premier siège de piston (76), et dans lequel, dans la seconde position du piston principal, ledit premier segment de piston (44) vient en prise avec le deuxième siège de piston (78).

5. Système de climatisation selon l'une quelconque des revendications 1 à 4, dans lequel le piston intérieur (58) a une première ouverture s'étendant radialement (68) s'ouvrant dans le premier alésage (62) dans le piston intérieur, et une deuxième ouverture s'étendant radialement (70) s'ouvrant dans le second alésage (64) dans le piston intérieur, dans lequel le piston principal (38) a une première ouverture (72) s'ouvrant dans une première chambre de fluide prédéterminée (52), et une seconde ouverture (74) s'ouvrant dans une autre chambre de fluide prédéterminée (54), dans lequel, dans la première position du piston intérieur, les premières ouvertures sont alignées, et les secondes ouvertures sont alignées, et dans lequel, dans la seconde position du piston intérieur, la première ouverture dans le piston intérieur est alignée avec la deuxième ouverture dans le piston principal, et la deuxième ouverture dans le piston intérieur est alignée avec la première ouverture dans le piston principal.

6. Système de climatisation selon la revendication 5, dans lequel les première et deuxième ouvertures (68, 70) dans le piston intérieur (58) sont alignées sensiblement radialement, et dans lequel le piston intérieur est mobile axialement dans le piston principal (38).

7. Système de climatisation selon l'une quelconque des revendications 1 à 6, dans lequel le piston principal (38) a des premier, deuxième et troisième segments de piston (42, 44, 46) espacés axialement qui définissent des première, deuxième, troisième et quatrième chambres de fluide (50 à 56) espacées axialement dans l'alésage (40) du boîtier (34), le premier alésage (62) dans le piston intérieur (58) étant relié de manière fluide à la première chambre de fluide (50), et le second alésage (64) dans le piston intérieur étant relié de manière fluide à la quatrième chambre de fluide (56).

8. Système de climatisation selon la revendication 7, dans lequel la soupape d'inversion (32) a des premier, deuxième, troisième, quatrième et cinquième orifices de fluide (80 à 88) espacés axialement, les premier et cinquième orifices de fluide (80, 88) étant reliés de manière fluide au second échangeur thermique (18), le deuxième orifice de fluide (82) étant relié de manière fluide à l'entrée de compresseur (28), le troisième orifice de fluide (84) étant relié de manière fluide au premier échangeur thermique (14), et le quatrième orifice de fluide (86) étant relié de manière fluide à la sortie de compresseur (26), dans lequel, dans la première position du piston principal (38), les premier et deuxième orifices de fluide sont reliés de manière fluide à la deuxième chambre de fluide (52), les troisième et quatrièmes orifices de fluide sont reliés de manière fluide à la troisième chambre de fluide (54), et le cinquième orifice de fluide est fermé, et dans lequel, dans la seconde position du piston principal, le premier orifice de fluide est fermé, et les deuxième et troisième orifices de fluide sont reliés de manière fluide à la deuxième chambre de fluide, et les quatrième et cinquième orifices de fluide sont reliés de manière fluide à la troisième chambre de fluide.

9. Soupape d'inversion pour un système de climatisation comportant un boîtier (34) ayant un alésage s'étendant axialement (36), un piston principal (38) ayant des segments de piston (42 à 46) espacés axialement constituant un agencement coulissant d'étanchéité dans l'alésage, de telle sorte que le piston principal peut se déplacer dans une direction axiale (A) par rapport au boîtier entre une première position et une seconde position, des chambres de fluide (50 à 56) espacées axialement dans l'alésage défini par les segments de piston, des orifices de fluide (80 à 88) pouvant être reliés de manière fluide à des chambres de fluide prédéterminées selon la position du piston principal, **caractérisée par** un piston intérieur (58) positionné dans un alésage traversant (40) dans le piston principal, le piston intérieur pouvant tourner par rapport au piston principal entre une première position et une seconde position, et ayant des premier et second alésages (62, 64) alignés, séparés par une paroi (66), et reliant de manière fluide des chambres de fluide prédéterminées selon la position du piston intérieur, des moyens (60) pour faire tourner le piston intérieur, dans laquelle dans la première position du piston intérieur, du fluide mis sous pression entrant est dirigé vers au moins une chambre de fluide prédéterminée par le piston intérieur pour déplacer le piston principal vers sa première position, et dans laquelle dans la seconde position du piston intérieur, du fluide mis sous pression entrant est dirigé par le piston intérieur vers au moins une autre chambre de fluide prédéterminée pour déplacer le piston principal vers sa seconde position.

10. Soupape d'inversion selon la revendication 9, dans laquelle les moyens (60) pour tourner le piston intérieur comportent un moteur électrique.

11. Soupape d'inversion selon la revendication 9, dans laquelle les moyens (60) pour tourner le piston intérieur comportent un solénoïde.

12. Soupape d'inversion selon l'une quelconque des revendications 9 à 11, dans laquelle la soupape d'inversion (32) comporte des premier et deuxième sièges de piston (76, 78), dans laquelle dans la première position du piston principal (38), un premier des segments de piston (44) vient en prise avec le premier siège de piston (76), et dans laquelle dans la seconde position du piston principal, ledit premier segment de piston (44) vient en prise avec le deuxième siège de piston (78).

13. Soupape d'inversion selon l'une quelconque des revendications 9 à 12, dans laquelle le piston intérieur (58) a une première ouverture (68) s'étendant radialement s'ouvrant dans le premier alésage (62) dans le piston intérieur, et une deuxième ouverture (70) s'étendant radialement s'ouvrant dans le second alésage (64) dans le piston intérieur, dans laquelle le piston principal (38) a une première ouverture (72) s'ouvrant dans une première chambre de fluide prédéterminée (52), et une deuxième ouverture (74) s'ouvrant dans une autre chambre de fluide prédéterminée (54), dans laquelle, dans la première position du piston intérieur, les premières ouvertures sont alignées, et les deuxièmes ouvertures sont alignées, et dans laquelle, dans la seconde position du piston intérieur, la première ouverture dans le piston intérieur est alignée avec la deuxième ouverture dans le piston principal, et la deuxième ouverture dans le piston intérieur est alignée avec la première ouverture dans le piston principal.

14. Soupape d'inversion selon la revendication 13, dans laquelle les première et deuxième ouvertures (68, 70) dans le piston intérieur (58) sont alignées sensiblement radialement, et dans laquelle le piston intérieur est mobile axialement dans le piston principal (38).

15. Soupape d'inversion selon l'une quelconque des revendications 9 à 14, dans laquelle le piston principal (38) a des premier, deuxième et troisième segments de piston (42 à 46) espacés axialement qui définissent des première, deuxième, troisième et quatrième chambres de fluide (50 à 56) espacées axialement dans l'alésage (40) du boîtier (34), le premier alésage (62) dans le piston intérieur (58) étant relié de manière fluide à la première chambre de fluide (50), et le second alésage (64) dans le piston intérieur étant relié de manière fluide à la quatrième chambre de fluide (56).

16. Soupape d'inversion selon la revendication 15, dans laquelle la soupape d'inversion (32) a des premier, deuxième, troisième, quatrième et cinquième orifices de fluide (80 à 88) espacés axialement, dans laquelle, dans la première position du piston principal (38), les premier et deuxième orifices de fluide (80, 82) sont reliés de manière fluide à la deuxième chambre de fluide (52), les troisième et quatrième orifices de fluide (84, 86) sont reliés de manière fluide à la troisième chambre de fluide (54), et le cinquième orifice de fluide (88) est fermé, et dans laquelle, dans la seconde position du piston principal, le premier orifice de fluide est fermé, les deuxième et troisième orifices de fluide sont reliés de manière fluide à la deuxième chambre de fluide, et les quatrième et cinquième orifices de fluide sont reliés de manière fluide à la troisième chambre de fluide.
